# EUROPÄISCHE PATENTSCHRIFT

(11) **EP 0 633 173 B1**
(45) Veröffentlichungstag und Bekanntmachung des Hinweises auf die Patenterteilung: **23.04.1997**
(21) Anmeldenummer: 94109677.8
(22) Anmeldetag: 23.06.1994
(51) Int. Cl.: B61C 5/00, B61D 3/10, B61D 13/00

(54) **Schienengebundenes Fahrzeug, insbesondere für den Personennahverkehr**
Trackbound vehicle, especially for urban passenger traffic
Véhicule sur rails, notamment pour le transport urbain de personnes

(30) Priorität: 08.07.1993 DE 4322760
(43) Veröffentlichungstag der Anmeldung: 11.01.1995
(73) Patentinhaber: DUEWAG AKTIENGESELLSCHAFT, D-47829 Krefeld (DE)
(72) Erfinder: Meyer, Gerd, Dr., D-51375 Leverkusen (DE); Müller, Hubert, D-47800 Krefeld (DE)

(56) Entgegenhaltungen:
- WO-A-87/05873
- DE-A- 1 903 283
- DE-C- 465 820
- DE-C- 949 482

## Beschreibung

Die Erfindung betrifft ein schienengebundenes Fahrzeug, insbesondere für den Personennahverkehr, bestehend aus mindestens einem Wagenkasten und zwei Fahrwerken, wobei zumindest ein Fahrwerk mit Hilfe einer im Dach des Wagenkastens angeordneten Antriebsmaschine und eines ebenfalls im Dach untergebrachten Generators elektrisch angetrieben ist.

In der Zeitschrift ZEV-Glasers Annalen 113 (1989) Nr. 6/7, S. 296-306 sind Entwicklungstendenzen bei Dieseltriebwagen beschrieben. Durch Abschnitt 7.3 sind schienengebundene Fahrzeuge mit elektrischer Leistungsübertragung bekannt, z. B. in Australien verkehrende einteilige Triebwagen der Baureihe 3000 und zweiteilige Triebzüge der Baureihe 3100. Bei diesen und anderen Triebwagen bzw. Triebzügen sind der Dieselmotor und der Generator am Untergestell des Wagenkastens aufgehängt. Im Zusammenhang damit ergibt sich eine relativ große Höhe des Fußbodens über der Schienenoberkante, üblicherweise in einer Größenordnung von 1300 mm. Eine solche Fußbodenhöhe ist für bequeme Ein- und Ausstiegsverhältnisse ungünstig.

Durch die DE-A-1 903 283 ist ein Schienenfahrzeug entsprechend der eingangs genannten Gattung bekannt, das mindestens einen Wagenkasten und zwei Fahrwerke aufweist. Zumindest ein Fahrwerk ist mit Hilfe einer Gasturbine als Antriebsmaschine und eines Generators elektrisch angetrieben, wobei die Gasturbine und der Generator im Dach des Wagenkastens angeordnet sind.

Gemäß WO-A-8 705 873 gehört ferner ein Schienenfahrzeug mit tiefliegendem Fußboden zum Stand der Technik, bei dem ein Fahrwerk durch eine im Dachbereich des Wagenkastens untergebrachte Antriebsmaschine, beispielsweise Elektromotor oder Verbrennungsmaschine, über Winkelgetriebe und vertikal stehende Wellen angetrieben ist.

Der Erfindung liegt die Aufgabe zugrunde, ein Fahrzeug der gattungsgemaßen Art auf möglichst einfache Weise so zu gestalten, daß eine zuverlässige Abschirmung des Fahrgastraumes von Schall und Schwingungen erzielbar ist.

Diese Aufgabe wird erfindungsgemäß dadurch gelöst, daß die als Dieselmotor ausgebildete Antriebsmaschine und der Generator auf einem Traggestell elastisch gelagert sind, das gegenüber Längsträgern des Daches federnd abgestützt ist. Der gewünschten Abschirmung dienen mithin zwei Federstufen.

Ein Fahrzeug mit dem Wagenkasten nach der Erfindung kann als einteiliger Triebwagen eingesetzt werden. Alternativ ist der Wagenkasten gemäß einer Ausgestaltung der Erfindung Bestandteil eines zwei- oder mehrteiligen Triebzuges.

Im Hinblick auf das Befahren kleinerer Gleisbogenhalbmesser, die im städteverbindenden und innerstädtischen Personennahverkehr anzutreffen sind, besteht eine nächste Ausführungsform der Erfindung darin, daß der Wagenkasten erheblich kürzer ist als das andere bzw. die übrigen Wagenteile des Triebzuges.

Nach einer weiteren Ausgestaltung der Erfindung ist eine Anordnung des Wagenkastens zwischen zwei äußeren Wagenteilen vorgesehen. Denkbar ist auch ein Einsatz des Wagenkastens als Vorausfahrzeug, also ähnlich einer Lokomotive.

In erfindungsgemäßer Weiterbildung empfiehlt es sich, daß die an den Enden des Triebzuges befindlichen Fahrwerke angetrieben sind. Dadurch ist vorteilhaft die Möglichkeit gegeben, einen besonders langen Fußbodenbereich durchgehend niederflurig auszuführen, beispielsweise in einer Höhe von nur 600 mm oder weniger über der Schienenoberkante. Dieser niederflurige Bereich erstreckt sich zumindest zwischen den End-Fahrwerken, und zwar auch dann, wenn als solche Fahrwerke Drehgestelle mit normalem Raddurchmesser von ca. 900 mm gewählt werden.

Um beispielsweise elektrische Verbindungen auf kurzem Wege erstellen zu können, ist gemäß einer weiteren Ausgestaltung der Erfindung vorgesehen, daß der elektrischen Ausrüstung zugehörige Komponenten - wie Gleichrichter, Traktionswechselricher, Bremswiderstände und Heizungsgerät - ebenfalls im Dach des Wagenkastens oder innerhalb des an den Wagenkasten angrenzenden Dachbereiches eines anderen Wagenteiles angeordnet sind.

Nach einer letzten Ausgestaltung der Erfindung weist der Wagenkasten oder ein anderes Wagenteil zumindest einen Stromabnehmer auf, wobei durch einen Elektroschalter eine dieselelektrische oder eine aus einer Fahrleitung gespeiste Antriebsart wählbar ist. Das so gebildete Hybrid-Fahrzeug eignet sich vor allem für Schienenstrecken, die nicht durchgehend elektrifiziert sind.

Ein Ausführungsbeispiel der Erfindung ist in der Zeichnung schematisch dargestellt und wird im weiteren näher beschrieben. Es zeigen
- Fig. 1: einen Triebzug in Seitenansicht,
- Fig. 2: den Wagenkasten 1 aus Fig 1 im Schnitt quer zur Längsachse, wobei die Seitenwände verkürzt dargestellt sind,
- Fig. 3: eine die Fig. 2 ergänzende Ansicht von oben.

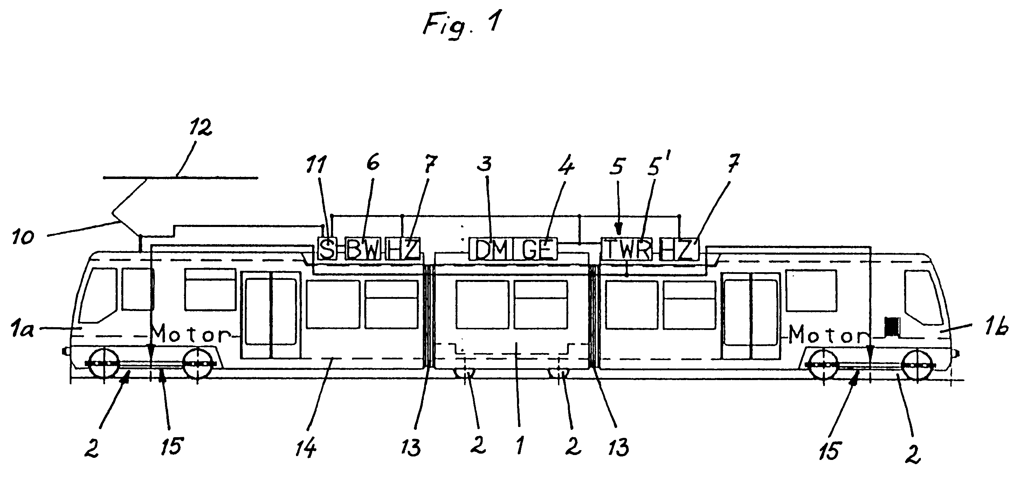

Gemäß Fig. 1 besteht der Triebzug aus zwei äußeren Wagenteilen 1a, 1b und einem kurzen mittleren Wagenkasten 1, der auf zwei, im Ausführungsbeispiel als Laufachsen gestalteten Fahrwerken 2 abgestützt ist. Die Wagenteile 1a, 1b sind mit dem Wagenkasten 1 gelenkig verbunden, wobei diese Gelenkverbindungen jeweils durch einen Faltenbalg 13 abgeschirmt sind. Der Fußboden 14 des Triebzuges hat einen Niederfluranteil von rund 70%.

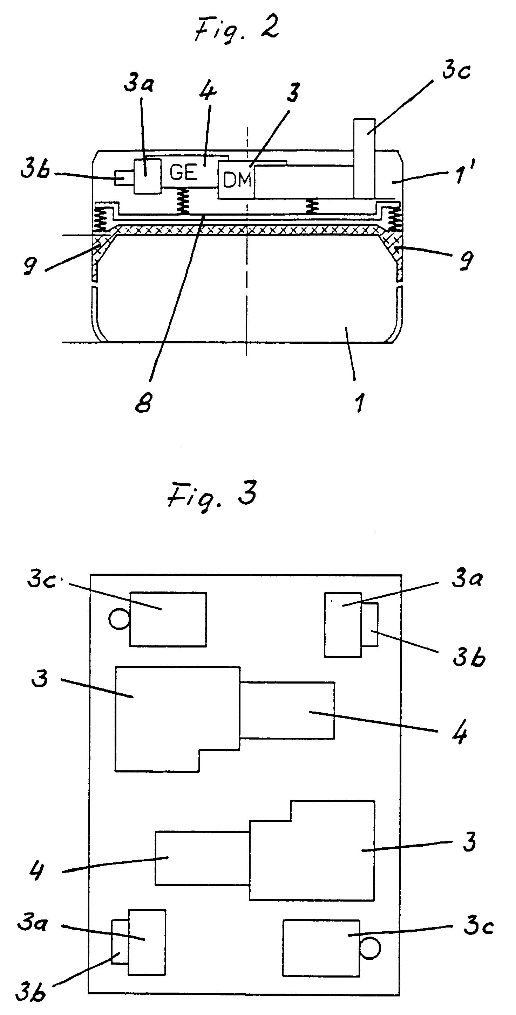

Der Wagenkasten 1 enthält in seinem Dach 1' einen Dieselmotor 3 und einen Generator 4. Diese Baugruppen 3, 4 und zum Dieselmotor 3 gehörende Aggregate - hier Wasserkühler 3a, Ladeluftkühler 3b und Schalldämpfer 3c - sind auf einem in Fig. 2 gezeigten Traggestell 8 elastisch gelagert. Das Traggestell 8 ist gegenüber äußeren Längsträgern 9 des Daches 1' federnd abgestützt. In Fig. 3 ist im übrigen die Möglichkeit einer zweimotorigen Ausführung dargestellt.

Innerhalb der an den Wagenkasten 1 angrenzenden Dachbereiche der äußeren Wagenteile 1a, 1b sind Komponenten der elektrischen Ausrüstung des Triebzuges untergebracht. Dazu gehören beispielsweise ein Gleichrichter 5, ein Traktionswechselrichter 5', Bremswiderstände 6 und ein Heizungsgerät 7. Bei entsprechender Länge des Wagenkastens 1 kann die elektrische Ausrüstung auch in dessen Dach 1' plaziert sein.

Der mittels Dieselmotor 3 und Generator 4 erzeugte Strom dient dem Antrieb von Fahrmotoren 15, die Bestandteil der drehgestellartigen Fahrwerke 2 an den Enden des Triebzuges sind. Eine nicht gezeichnete Variante liegt darin, im Bereich der Gelenke Jakobs-Fahrwerke anzuordnen und diese elektrisch anzutreiben.

Der Triebzug mit dieselelektrischem Antrieb kann auf allen Schienenstrecken verkehren. Hinsichtlich eines Fahrbetriebs auf elektrifizierten Strecken weist der Zug zumindest einen Stromabnehmer 10 und einen Elektroschalter 11 auf (siehe Fig. 1). Durch diesen Schalter 11 ist eine dieselelektrische oder eine aus einer Fahrleitung 12 gespeiste Antriebsart wählbar.

## Patentansprüche

1. Schienengebundenes Fahrzeug, insbesondere für den Personennahverkehr, bestehend aus mindestens einem Wagenkasten (1) und zwei Fahrwerken (2), wobei zumindest ein Fahrwerk (2) mit Hilfe einer im Dach (1') des Wagenkastens (1) angeordneten Antriebsmaschine und eines ebenfalls im Dach (1') untergebrachten Generators (4) elektrisch angetrieben ist, dadurch gekennzeichnet, daß die als Dieselmotor (3) ausgebildete Antriebsmaschine und der Generator (4) auf einem Traggestell (8) elastisch gelagert sind, das gegenüber Längsträgern (9) des Daches (1') federnd abgestützt ist.

2. Schienengebundenes Fahrzeug nach Anspruch 1, dadurch gekennzeichnet, daß der Wagenkasten (1) Bestandteil eines zwei- oder mehrteiligen Triebzuges ist.

3. Schienengebundenes Fahrzeug nach Anspruch 2, dadurch gekennzeichnet, daß der Wagenkasten (1) erheblich kürzer ist als das andere bzw. die übrigen Wagenteile (1a, 1b) des Triebzuges.

4. Schienengebundenes Fahrzeug nach Anspruch 2 oder 3, dadurch gekennzeichnet, daß der Wagenkasten (1) zwischen zwei äußeren Wagenteilen (1a, 1b) angeordnet ist.

5. Schienengebundenes Fahrzeug nach einem der Ansprüche 2 bis 4, dadurch gekennzeichnet, daß die an den Enden des Triebzuges befindlichen Fahrwerke (2) angetrieben sind.

6. Schienengebundenes Fahrzeug nach einem der Ansprüche 1 bis 5, dadurch gekennzeichnet, daß der elektrischen Ausrüstung zugehörige Komponenten - wie Gleichrichter (5), Traktionswechselrichter (5'), Bremswiderstände (6) und Heizungsgerät (7) - ebenfalls im Dach (1') des Wagenkastens (1) oder innerhalb des an den Wagenkasten (1) angrenzenden Dachbereiches eines anderen Wagenteiles (1a, 1b) angeordnet sind.

7. Schienengebundenes Fahrzeug nach einem der Ansprüche 1 bis 6, dadurch gekennzeichnet, daß der Wagenkasten (1) oder ein anderes Wagenteil (1a, 1b) zumindest einen Stromabnehmer (10) aufweist, wobei durch einen Elektroschalter (11) eine dieselelektrische oder eine aus einer Fahrleitung (12) gespeiste Antriebart wählbar ist.

## Claims

1. A rail-borne vehicle, in particular for local passenger transport, consisting of at least one carriage body (1) and two running gears (2), at least one running gear (2) being electrically driven by a driving engine arranged in the roof (1') of the carriage body (1) and a generator (4) likewise housed in the roof (1'), characterised in that the driving engine in the form of a diesel engine (3) and the generator (4) are resiliently mounted on a supporting structure (8) spring-supported relative to longitudinal members (9) of the roof (1').

2. A rail-borne vehicle in accordance with Claim 1, characterised in that the carriage body (1) is a constituent part of a two-part or multi-part motor-coach train.

3. A rail-borne vehicle in accordance with Claim 2, characterised in that the carriage body (1) is considerably shorter than the other or the rest of the carriage parts (1a, 1b) of the motor-coach train.

4. A rail-borne vehicle in accordance with Claim 2 or 3, characterised in that the carriage body (1) is arranged between two outer carriage parts (1a, 1b).

5. A rail-borne vehicle in accordance with any one of Claims 2 to 4, characterised in that the running gears (2) located at the ends of the motor-coach train are driven.

6. A rail-borne vehicle in accordance with any one of Claims 1 to 5, characterised in that components forming part of the electrical equipment ― such as rectifier (5), traction inverter (5'), braking resistors (6) and heating apparatus (7) ― are likewise arranged in the roof (1') of the carriage body (1) or within that roof region of another carriage part (1a, 1b) which is adjacent to the carriage body (1).

7. A rail-borne vehicle in accordance with any one of Claims 1 to 6, characterised in that the carriage body (1) or another carriage part (1a, 1b) has at least one current collector (10), a diesel-electric mode of driving or powering through a contact line (12) being selectable by means of an electric switch (11).

## Revendications

1. Véhicule roulant sur rails, notamment pour le transport de voyageurs sur de courtes distances, composé d'au moins une caisse de voiture (1) et de deux dispositifs de roulement (2), sachant qu'au moins un dispositif de roulement (2) est entraîné à l'aide d'une machine motrice située dans le toit (1') de la caisse de voiture (1) et d'un générateur électrique (4) également logé dans le toit (1'), caractérisé en ce que la machine motrice réalisée sous la forme d'un moteur Diesel (3) et le générateur (4) sont montés avec ressort sur un châssis (8) qui prend appui avec ressort sur des longerons (9) du toit (1').

2. Véhicule roulant sur rails selon la revendication 1, caractérisé en ce que la caisse de voiture (1) fait partie d'une rame automotrice à deux ou plusieurs parties.

3. Véhicule roulant sur rails selon la revendication 2, caractérisé en ce que la caisse de voiture (1) est beaucoup plus courte que l'autre ou les autres parties de voitures (1a, 1b) de la rame automotrice.

4. Véhicule roulant sur rails selon la revendication 2 ou 3, caractérisé en ce que la caisse de voiture (1) est placée entre deux parties de voitures d'extrémité (1a, 1b).

5. Véhicule roulant sur rails selon l'une des revendications 2 à 4, caractérisé en ce que les dispositifs de roulement (2) situés aux extrémités de la rame automotrice sont entraînés.

6. Véhicule roulant sur rails selon l'une des revendications 1 à 5, caractérisé en ce que des composants ― tels que le redresseur (5), l'onduleur (5'), les résistances de freinage (6) et le dispositif de chauffage (7) ―, qui font partie de l'équipement électrique, sont également disposés dans le toit (1') de la caisse de voiture (1) ou à l'intérieur de la zone du toit d'une autre voiture (1a, 1b) qui est adjacente à la caisse de voiture (1).

7. Véhicule roulant sur rails selon l'une des revendications 1 à 6, caractérisé en ce que la caisse de voiture (1) ou une autre voiture (1a, 1b) présente au moins un pantographe (10), un interrupteur électrique (11) permettant de sélectionner soit un mode d'entraînement Diesel-électrique, soit un mode d'entraînement alimenté par un caténaire (12).
